# EUROPEAN PATENT SPECIFICATION

(11) **EP 2 469 787 B1**
(45) Date of publication and mention of the grant of the patent: **18.06.2014**
(21) Application number: 09848395.1
(22) Date of filing: 16.10.2009
(51) Int. Cl.: H04L 29/06, H04L 29/12

(54) **Method and device for preventing network attacks**
Verfahren und Vorrichtung zur Verhinderung von Netzwerkattacken
Procédé et dispositif pour prévenir des attaques de réseau

(30) Priority: 21.08.2009 CN 200910189617
(43) Date of publication of application: 27.06.2012
(73) Proprietor: Huawei Technologies Co., Ltd., Guangdong 518129 (CN)
(72) Inventor: SONG, Xuan, Shenzhen Guangdong 518129 (CN); CHEN, Xu, Shenzhen Guangdong 518129 (CN); JIANG, Sheng, Shenzhen Guangdong 518129 (CN)
(74) Representative: Isarpatent
(86) International application number: PCT/CN2009/074488
(87) International publication number: WO 2011/020254

(56) References cited:
- CN-A- 101 094 236
- CN-A- 101 094 236
- CN-A- 101 110 821
- CN-A- 101 170 515
- US-B1- 7 464 183

## Description

### FIELD OF THE INVENTION

The present invention relates to the communication field, and in particular, to a method and an apparatus for preventing a network attack.

### BACKGROUND OF THE INVENTION

In the IPv4 (Internet Protocol version 4), an ARP (Address Resolution Protocol) is a protocol for mapping an IP address to a MAC (Media Access Control) address. A basic function of the ARP is to query the MAC address of a target node according to the IP address of the target node to ensure smooth communication.

However, in the IPv6 (Internet Protocol version 6), an NDP (Neighbor Discovery Protocol) is used to discover a host and a router on a link automatically. The NDP is an upgrade and improvement of combination of functions of certain protocols of the IPv4 in the IPv6, for example, the address resolution function of the ARP, and a router discovery and redirection function of an ICMP (Internet Control Message Protocol).

In the IPv4, because an authentication mechanism is not provided, the ARP tends to be manipulated by an attacker, and a device is vulnerable to network attacks such as flooding and spoofing. With the construction of an IPv6 network, more and more importance is attached to the NDP in the IPv6 protocol family. However, the NDP itself does not provide any authentication mechanism, and thus the host in the network is still not trustable. Meanwhile, the NDP needs to support more subnet address space, and maintain complex connection state information for each address. These problems make the attacks on the NDP easier and more harmful.

The following describes several common network attack scenarios and solutions in the prior art by taking the ARP in the IPv4 as an example.
1. ARP flooding attack: The attacker keeps sending plenty of ARP request packets and ARP reply packets, a source IP address, a source MAC address, and a VLAN (Virtual Local Area Network) of which change randomly. This attack has two purposes: One is to cause an ARP sending bandwidth of a receiver (such as a gateway device) to be occupied through plenty of ARP packets and crowd out ARP packets of a normal user; the other one is to let the receiver learn a mass of incorrect ARP table entries so that an ARP table of the receiver is filled.
2. ARP gateway spoofing attack: The attacker sends an ARP packet to other hosts in a same network segment by pretending to be a gateway device. The source IP address of the ARP packet is the IP address of the gateway, and the source MAC address of the ARP packet is the MAC address of the attacker. The other hosts in the same network segment receive the ARP packet sent by the attacker, and learn an incorrect ARP table entry of the gateway. Subsequently, data sent by the other hosts in the same network segment to the gateway device is wrongly sent to the attacker.
3. ARP user spoofing attack: The attacker sends an ARP packet to the gateway device by pretending to be another normal host in the same network segment. The source IP address of the ARP packet is the IP address of the another normal host in the same network segment, and the source MAC address of the ARP packet is the MAC address of the attacker or a MAC address encapsulated randomly. The gateway device receives the ARP packet, and learns an incorrect ARP table entry. Subsequently, data sent by the gateway device to another normal host in the same network segment is wrongly sent to the attacker or another place.

In the NDP, a similar network attack may also lead to overflow of a neighbor cache and thus cause processing performance of the device to deteriorate, and affect a normal service.

To prevent the foregoing network attack behavior from causing damage to the device, the prior art provides many solutions.

For example, in the prior art, after receiving an ARP request packet, the receiver replies the ARP request packet on a forwarding plane by directly using high-speed processing capability of an NP (Network Processor) in the forwarding plane, without sending the ARP request packet to a CPU (Central Processing Unit). In this way, the ARP flooding attack

caused by sending the plenty of ARP request packets sent by the attacker to the CPU is avoided.

The prior art has the following disadvantages: After receiving a protocol packet used for address resolution (such as an ARP packet), the receiver does not send the packet to the CPU for processing, but processes the packet on the forwarding plane directly. The foregoing technical solution cannot support some application which requires sending the protocol packet used for address resolution to the CPU for processing, such as ARP Proxy and QinQ (802.1Q in 802.1Q)

Document D1 (US 7464183 B1) describes a firewall identifying unsolicited message having an address resolution for a network protocol address different than cached address resolution information. The accuracy of the unsolicited message is checked by requesting network elements to report address resolution information for the network protocol address.

Document D2 (EP 2139187 A1) describes an Address Resolution Protocol (ARP) packet processing method. The method includes: receiving an ARP packet, and judging the type of the ARP packet; when the ARP packet is an ARP request, responding to the ARP request if an entry corresponding to the ARP request is found in a locally configured ARP table; and when the ARP packet is an ARP response, reporting the ARP response if an entry corresponding to the ARP response is found in the locally configured ARP table and a reporting parameter in the entry indicates permission of reporting; or discarding the ARP response if no entry corresponding to the ARP response is found in the ARP table.

### SUMMARY OF THE INVENTION

Embodiments of the present invention provide the following technical solutions, which can solve the problem that the prior art cannot support some application which requires sending a protocol packet used for address resolution to a CPU for processing.

An embodiment of the present invention provides a method for preventing a network attack, where the method includes:
receiving a packet;
when the received packet is a first packet, judging whether a source Internet Protocol, IP, address and a source Media Access Control, MAC, address information that are carried in the first packet exist in a first record table, which at least includes a source IP address and a source MAC address that are learned for the first time; and
when the source IP address and the source MAC address information that are carried in the first packet exist in the first record table, obtaining a second packet, the source addresses of which are the same as the source addresses of the first packet, according to the first packet, and sending the second packet to a central processing unit, CPU, for processing;
where the first packet is an Address Resolution Protocol, ARP, reply packet, or a neighbor advertisement, NA, packet, or a router advertisement, RA, packet;
when the first packet is the ARP reply packet, the second packet is an ARP request packet; when the first packet is the NA packet, the second packet is a neighbor solicitation, NS, packet; and when the first packet is the RA packet, the second packet is a router solicitation, RS, packet.

Another embodiment of the present invention provides an apparatus for preventing a network attack, where the apparatus includes:
a receiving module (700), configured to receive a packet, and when the received packet is a first packet, trigger a first judging module (710);
a first judging module (710), configured to judge whether a source Internet Protocol, IP, address and a source Media Access Control, MAC, address information that are carried in the first packet exist in a first record table, which at least includes a source IP address and a source MAC address that are learned for the first time; and when the source IP address and the source MAC address information that are carried in the first packet exist in the first record table, the first judging module (710) is configured to trigger an first sending module (720); and
a first sending module (720), configured to obtain a second packet, the source addresses of which are the same as the source addresses of the first packet, according to the first packet, and send the second packet to a central processing unit, CPU, for processing;
where the first packet is an Address Resolution Protocol, ARP, reply packet, or a neighbor advertisement, NA, packet, or a router advertisement, RA, packet;
when the first packet is the ARP reply packet, the second packet is an ARP request packet; when the first packet is the NA packet, the second packet is a neighbor solicitation, NS, packet; and when the first packet is the RA packet, the second packet is a router solicitation, RS, packet.

By using the method and apparatus provided in the embodiments of the present invention, the network attack can be prevented effectively, and a packet can be sent to the CPU for processing in the case that the validity of the packet is determined. Therefore, some application which requires sending the packet to the CPU for processing is supported.

### BRIEF DESCRIPTION OF THE DRAWINGS

FIG. 1 (a) is a schematic flowchart of a method for preventing a network attack according to an embodiment of the present invention;
FIG. 1 (b) is a schematic flowchart of another method for preventing a network attack according to an embodiment of the present invention;
FIG. 2 is a schematic flowchart of another method for preventing a network attack according to another embodiment of the present invention;
FIG. 3 is a schematic flowchart of a method for preventing an ARP network attack according to an embodiment of the present invention;
FIG. 4 is a schematic flowchart of another method for preventing an ARP network attack according to an embodiment of the present invention;
FIG. 5 is a schematic flowchart of a method for preventing an NDP network attack according to an embodiment of the present invention;
FIG. 6 (a) is a schematic flowchart of another method for preventing an NDP network attack according to an embodiment of the present invention
FIG. 6 (b) is a schematic flowchart of another method for preventing an NDP network attack according to an embodiment of the present invention;
FIG. 7 is a schematic diagram of an apparatus for preventing a network attack according to an embodiment of the present invention;
FIG. 8 is a schematic diagram of another apparatus for preventing a network attack according to an embodiment of the present invention;
FIG. 9 is a schematic diagram of another apparatus for preventing a network attack according to an embodiment of the present invention;
FIG. 10 is a specific application scenario of an embodiment of present invention;
FIG. 11 is another specific application scenario of an embodiment of present invention; and
FIG. 12 is another specific application scenario of an embodiment of present invention.

### DETAILED DESCRIPTION OF THE EMBODIMENTS

To make the objectives, technical solutions and merits of the embodiments of the present invention clearer, the following further describes the embodiments of the present invention in detail with reference to the accompanying drawings.

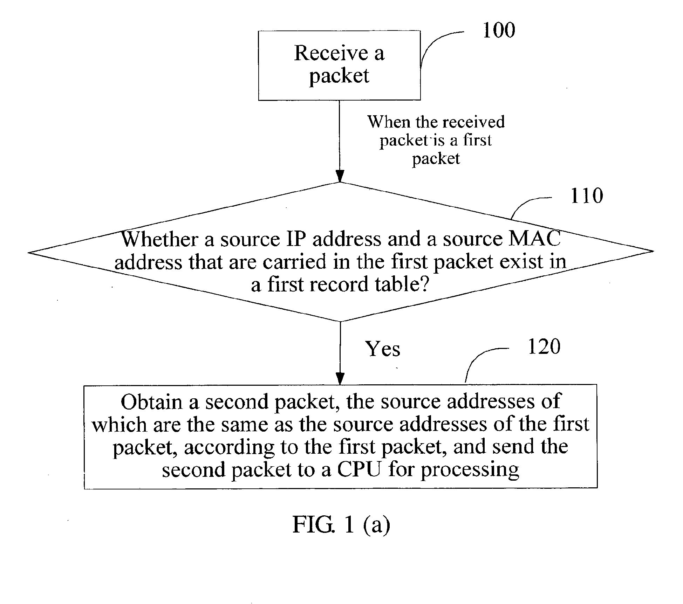

As shown in FIG. 1 (a), which is a schematic flowchart of a method for preventing a network attack according to an embodiment of the present invention, the method includes:
100. Receive a packet, and when the received packet is a first packet, perform 110.

In the IPv4, the first packet may be an ARP reply packet.

In the IPv6, the first packet may be an NA (Neighbor Advertisement) packet or an RA (Router Advertisement) packet.

110. Judge whether a source IP address and a source MAC address information that are carried in the first packet exist in a first record table.

In the embodiment of the present invention, the first record table at least includes information such as a source IP address and a source MAC address that are learned for the first time. According to the first record table, whether the received first packet is sent by a legal user can be judged.

For example, in the IPv4, the source IP address and the source MAC address that are learned for the first time may be a source IP address and a source MAC address that are carried in an ARP request packet received for the first time. In the IPv6, the source IP address and the source MAC address that are learned for the first time may be a source IP address and a source MAC address that are carried in an NS (Neighbor Solicitation) packet received for the first time or in an RS (Router Solicitation) packet received for the first time.

Optionally, the first record table may further include other information such as a VLAN that is learned for the first time and an ingress interface.

Optionally, the first record table may further include sending state information. For example, the sending state information may be that whether a first packet corresponding to a record table entry has been sent to a CPU for processing. If the first packet corresponding to the record table entry has been sent to the CPU for processing, the sending state information may be recorded as S1; and if the first packet corresponding to the record table entry has not been sent to the CPU for processing, the sending state information may be recorded as S0.

Optionally, in practical application, an entry in the first record table may be a record in a memory, or a record in a database, or a record in a TCAM (Ternary Content Addressable Memory).

When the source IP address and source MAC address information that are carried in the first packet exist in the first record table, perform 120.

120. Obtain a second packet, the source addresses of which are the same as the source addresses of the first packet, according to the first packet, and send the second packet to the CPU for processing. The source addresses of the second packet are the same as the source addresses of the first packet refers to: The source IP address carried in the second packet is the same as the source IP address carried in the first packet, and the source MAC address carried in the second packet is the same as the source MAC address carried in the first packet.

In the IPv4, the second packet may be an ARP request packet.

In the IPv6, the second packet may be an NS packet or an RS packet.

In this embodiment, when the source IP address and the source MAC address information that are carried in the first packet exist in the first record table, it may be deemed that the first packet is sent by a legal user, and the second packet is sent to the CPU for processing.

Optionally, in the embodiment of the present invention, the second packet with the same source addresses as the source addresses of the first packet may be obtained by reserving the source IP address and the source MAC address that are carried in the first packet, removing a destination IP address and a destination MAC address that are carried in the first packet, and changing the type of the first packet.

For example, for an ARP packet in the IPv4, the ARP reply packet (the first packet) is changed to the ARP request packet (the second packet) with the same source addresses, and the ARP request packet is sent to the CPU for processing.

For another example, for an NDP packet in the IPv6, the NA packet (the first packet) is changed to the NS packet (the second packet) with the same source addresses, and the NS packet is sent to the CPU for processing. Alternatively, the RA packet (the first packet) is changed to the RS packet with the same source addresses, and the RS packet is sent to the CPU for processing.

Certainly, in practical application, the obtaining of the second packet is not limited to the foregoing modes, which is described in detail in subsequent embodiments.

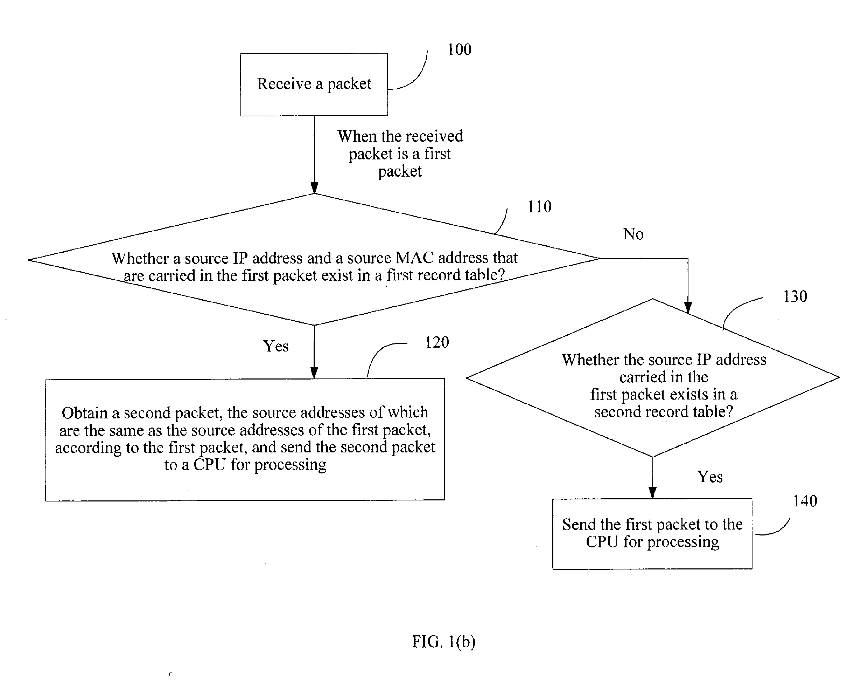

Optionally, as shown in FIG. 1 (b), in an embodiment of the present invention, when the source IP address and the source MAC address information that are carried in the first packet do not exist in the first record table, perform 130.

130. Judge whether the source IP address information carried in the first packet exists in a second record table.

In the embodiment of the present invention, the second record table at least includes information such as a destination IP address carried in a packet sent for the first time, for example, a destination IP address carried in an ARP request packet sent for the first time in the IPv4, or a destination IP address carried in an NS packet sent for the first time or in an RS packet sent for the first time in the IPv6.

Optionally, the second record table may further include sending state information. For example, the sending state information may be that whether a first packet corresponding to a record table entry has been sent to the CPU for processing. If the first packet corresponding to the record table entry has been sent to the CPU for processing, the sending state information may be recorded as S1; and if the first packet corresponding to the record table entry has not been sent to the CPU for processing, the sending state information may be recorded as S0.

Optionally, in practical application, an entry in the second record table may be a record in a memory, or a record in a database, or a record in a TCAM.

140. When the source IP address information carried in the first packet exists in the second record table, send the first packet to the CPU for processing.

Optionally, if the second record table includes the sending state information, whether the sending state information is S0 or S1 may be judged when the source IP address information carried in the first packet exists in the second record table. If the sending state information is S1, it is indicated that the first packet corresponding to the record table entry has been sent. In this case, no more operation needs to be performed to relieve the load of the CPU. If the sending state information is S0, the operation of "sending the first packet to the CPU for processing" in 140 may still be performed, and then the sending state information is set to S1.

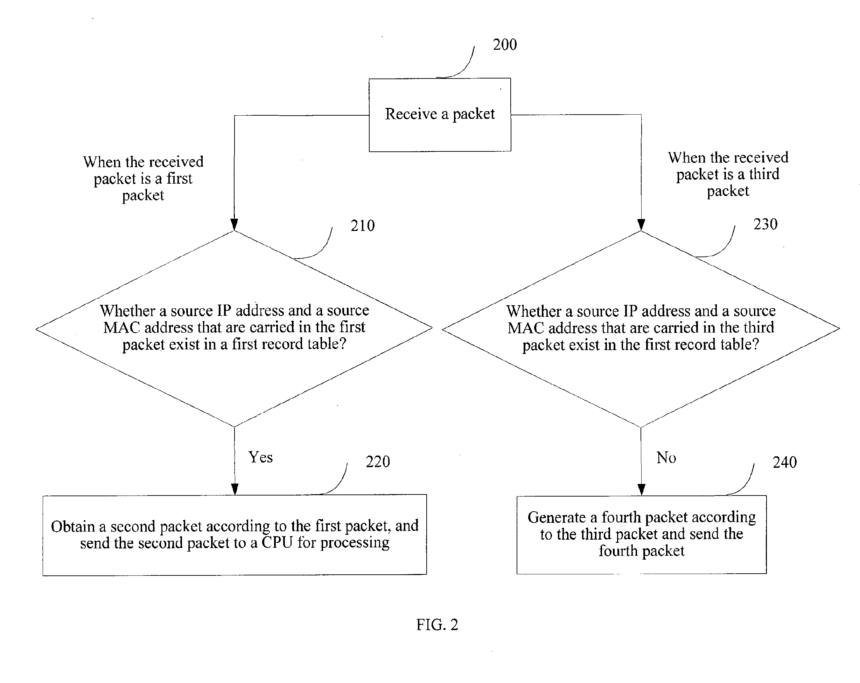

As shown in FIG. 2, which is a schematic flowchart of another method for preventing a network attack according to another embodiment of the present invention, the method includes:
200: Receive a packet.

When the received packet is a first packet, perform 210 to 220.

In the IPv4, the first packet may be an ARP reply packet.

In the IPv6, the first packet may be an NA packet or an RA packet.

210. Judge whether a source IP address and a source MAC address information that are carried in the first packet exist in a first record table.

In this embodiment of the present invention, the first record table at least includes information such as a source IP address and a source MAC address entry that are learned for the first time. Therefore, according to the first record table, whether the received first packet is sent by a legal user can be judged.

Optionally, the first record table may further include other information such as a VLAN which is learned for the first time and an ingress interface, where the VLAN and the ingress interface are carried in the first packet.

Optionally, the first record table may further include sending state information. For example, the sending state information may indicate whether a first packet corresponding to a record table entry has been sent to a CPU for processing. If the first packet corresponding to the record table entry has been sent to the CPU for processing, the sending state information may be recorded as S1; and if the first packet corresponding to the record table entry has not been sent to the CPU for processing, the sending state information may be recorded as S0.

Optionally, in practical application, an entry in the first record table may be a record in a memory, or a record in a database, or a record in a TCAM (Ternary Content Addressable Memory).

220. When the source IP address and the source MAC address information that are carried in the first packet exist in the first record table, obtain the second packet according to the first packet, and send the second packet to the CPU for processing, where a source IP address carried in the second packet is the same as the source IP address carried in the first packet, and a source MAC address carried in the second packet is the same as the source MAC address carried in the first packet.

In the IPv4, the second packet may be an ARP request packet.

In the IPv6, the second packet may be an NS packet or an RS packet.

In this embodiment, when the source IP address and the source MAC address information that are carried in the first packet exist in the first record table, it may be deemed that the first packet is sent by a legal user, and the second packet is sent to the CPU for processing.

Optionally, in the embodiment of the present invention, the second packet may be obtained by reserving the source IP address and the source MAC address that are carried in the first packet, removing a destination IP address a destination MAC address that are carried in the first packet, and changing the type of the first packet.

For example, for an ARP packet in the IPv4, the ARP reply packet (the first packet) is changed to the ARP request packet (the second packet) with the same source addresses, and the ARP request packet is sent to the CPU for processing.

For another example, for an NDP packet in the IPv6, the NA packet (the first packet) is changed to the NS packet (the second packet) with the same source addresses, and the NS packet is sent to the CPU for processing. Alternatively, the RA packet (the first packet) is changed to the RS packet (the second packet) with the same source addresses, and the RS packet is sent to the CPU for processing.

Optionally, if the first record table includes the sending state information, whether the sending state information is S0 or S1 may be judged when the source IP address and the source MAC address information that are carried in the first packet exist in the first record table. If the sending state information is S1, it is indicated that the second packet corresponding to the record table entry has been sent. In this case, no more operation needs to be performed to relieve the load of the CPU. If the sending state information is S0, the operation of "sending the second packet to the CPU for processing" in 220 may still be performed, and then the sending state information is set to S 1.

When the received packet is a third packet, perform 230 to 240.

In the IPv4, the third packet may be an ARP request packet.

In the IPv6, the third packet may be an NS packet or an NA packet or an RS packet.

230. Judge whether source IP address and the source MAC address information that are carried in the third packet exist in the first record table.

240. When the source IP address and the source MAC address information that are carried in the third packet do not exist in the first record table, generate a fourth packet according to the third packet and send the fourth packet.

In the IPv4, the fourth packet may be an ARP request packet.

In the IPv6, the fourth packet may be an NS packet or an RS packet.

In this embodiment, a destination IP address carried in the fourth packet is the same as the source IP address carried in the third packet.

In an embodiment of the present invention, when the source IP address and the source MAC address information that are carried in the third packet do not exist in the first record table, the validity of the third packet cannot be determined. Therefore, the third packet is not directly sent to the CPU for processing, but a reverse detection packet (the fourth packet) is generated and sent to verify the validity of the third packet.

To make the embodiments of the present invention clearer, the following gives more details by taking the ARP in the IPv4 as an example.

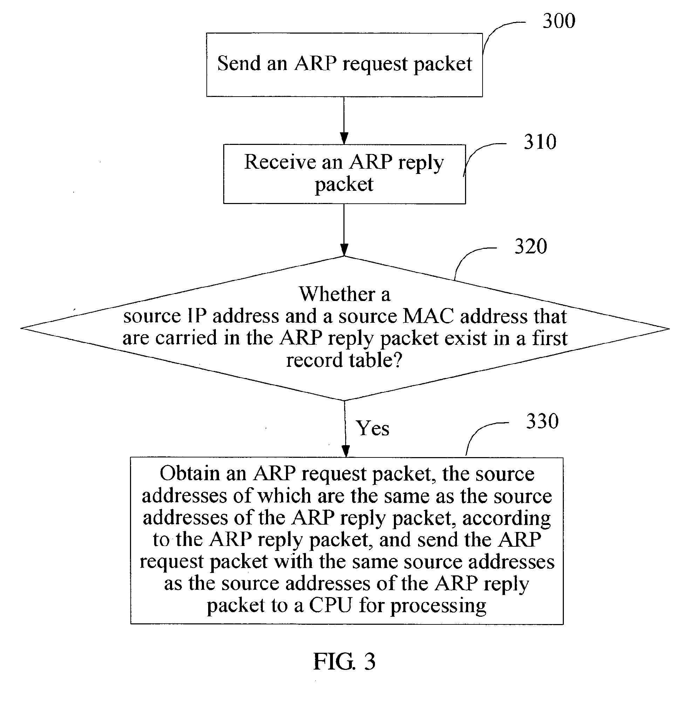

As shown in FIG. 3, which is a schematic flowchart of a method for preventing an ARP network attack according to an embodiment of the present invention, the method includes:
300. Send an ARP request packet.
310. Receive an ARP reply packet.

In this embodiment, the ARP reply packet received in 310 is a response made by a receiver of the ARP request packet sent in 300 in response to the ARP request packet.

320. Judge whether information such as a source IP address and a source MAC address that are carried in the ARP reply packet received in 310 exists in a first record table.

If the information such as the source IP address and the source MAC address that are carried in the ARP reply packet exists in the first record table, perform 330.

330. Obtain an ARP request packet, the source addresses of which are the same as the source addresses of the ARP reply packet, according to the ARP reply packet, and send the ARP request packet with the same source addresses as the source addresses of the ARP reply packet to a CPU for processing.

In this embodiment, the ARP request packet with the same source addresses as the source addresses of the ARP reply packet may be obtained by reserving the source IP address and the source MAC address that are carried in the ARP reply packet, removing a destination IP address and a destination MAC address that are carried in the ARP reply packet, and changing the type of the packet to a request packet.

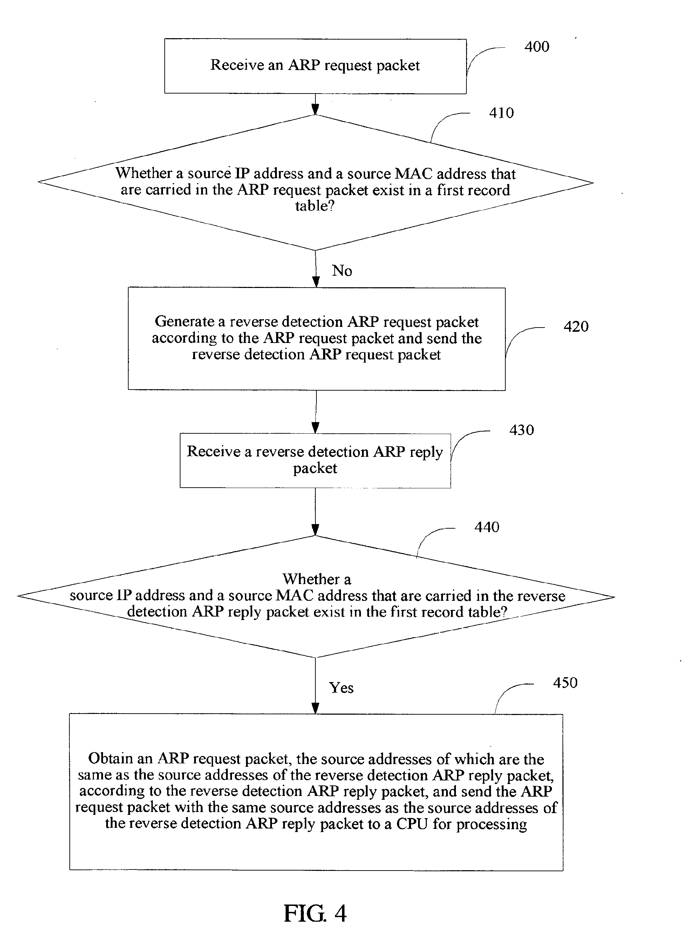

As shown in FIG. 4, which is a schematic flowchart of another method for preventing an ARP network attack according to an embodiment of the present invention, the method includes:
400. Receive an ARP request packet.
410. Judge whether information such as a source IP address and a source MAC address that are carried in the ARP request packet exists in a first record table.

When the information such as the source IP address and the source MAC address that are carried in the ARP request packet does not exist in the first record table, perform 420.

Optionally, when the information such as the source IP address and the source MAC address that are carried in the ARP request packet exists in the first record table, it is indicated that the ARP request packet has been received before, and no processing needs to be performed on the ARP request packet.

420. Generate a reverse detection ARP request packet according to the ARP request packet and send the reverse detection ARP request packet. A destination IP address carried in the reverse detection ARP request packet is the same as the source IP address carried in the ARP request packet received in 400.

430. Receive a reverse detection ARP reply packet.

In this embodiment, the reverse detection ARP reply packet is a response made by a receiver of the reverse detection ARP request packet in response to the reverse detection ARP request packet.

440. Judge whether information such as a source IP address and a source MAC address that are carried in the reverse detection ARP reply packet exists in the first record table.

When the information such as the source IP address and the source MAC address that are carried in the reverse detection ARP reply packet exists in the first record table, perform 450.

450: Obtain an ARP request packet, the source addresses of which are the same as the source addresses of the reverse detection ARP reply packet, according to the reverse detection ARP reply packet, and send the ARP request packet with the same source addresses as the source addresses of the reverse detection ARP reply packet to a CPU for processing.

In this embodiment of the present invention, the ARP request packet with the same source addresses as the source addresses of the reverse detection ARP reply packet may be obtained by reserving the source IP address and the source MAC address that are carried in the reverse detection ARP reply packet, removing a destination IP address and a destination MAC address that are carried in the reverse detection ARP reply packet, and changing the type of the packet to a request packet. In fact, the ARP request packet with the same source addresses as the source addresses of the reverse detection ARP reply packet may be the ARP request packet received in 400. For example, in this embodiment, the ARP request packet received in 400 may be buffered, and the buffered ARP request packet received in 400 may be directly sent to the CPU for processing when it is judged in 450 that the information such as the source IP address and the source MAC address that are carried in the reverse detection ARP reply packet exists in the first record table.

To make the embodiments of the present invention clearer, the following gives more details by taking the NDP in the IPv6 as an example.

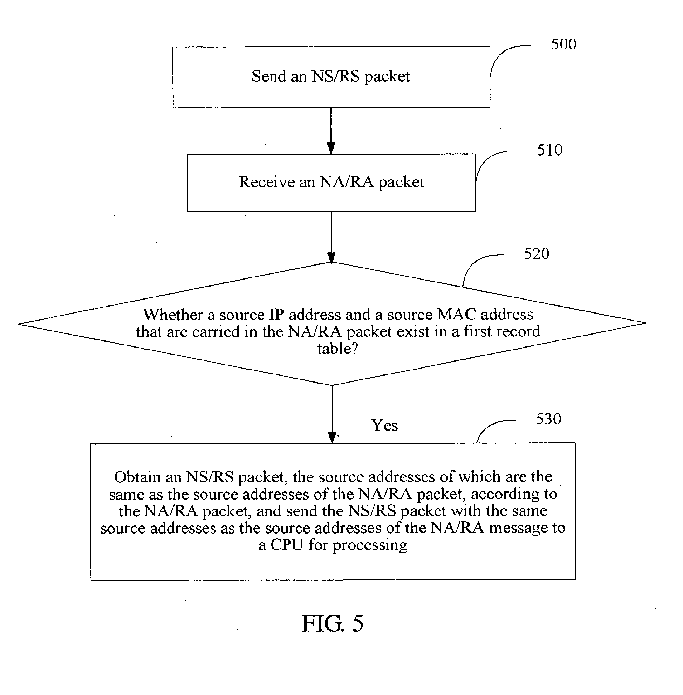

As shown in FIG. 5, which is a schematic flowchart of a method for preventing an NDP network attack according to an embodiment of the present invention, the method includes:
500. Send an NS or RS packet.
510: Receive an NA or RA packet.

In this embodiment, the NA packet received in 510 is a response made by a receiver of the NS packet sent in 500 in response to the NS packet; and the RA packet received in 510 is a response made by a receiver of the RS packet sent in 500 in response to the RS packet.

520. Judge whether information such as a source IP address and a source MAC address that are carried in the NA or RA packet, where the NA or RA packet is received in 510, exists in a first record table.

When the information such as the source IP address and the source MAC address that are carried in the NA or RA packet exists in the first record table, perform 530.

530. According to the NA packet, obtain an NS packet, the source addresses of which are the same as the source addresses of the NA packet, and send the NS packet to a CPU for processing; or, according to the RA packet, obtain an RS packet, the source addresses of which are the same as the source addresses of the RA packet, and send the RS packet to the CPU for processing.

In this embodiment, the NS packet with the same source addresses as the source addresses of the NA packet, or the RS packet with the same source addresses as the source addresses of the RA packet may be obtained by reserving the source IP address and the source MAC address that are carried in the NA or RA packet, removing a destination IP address and a destination MAC address that are carried in the NA or RA packet, and changing the type of the packet to a solicitation packet.

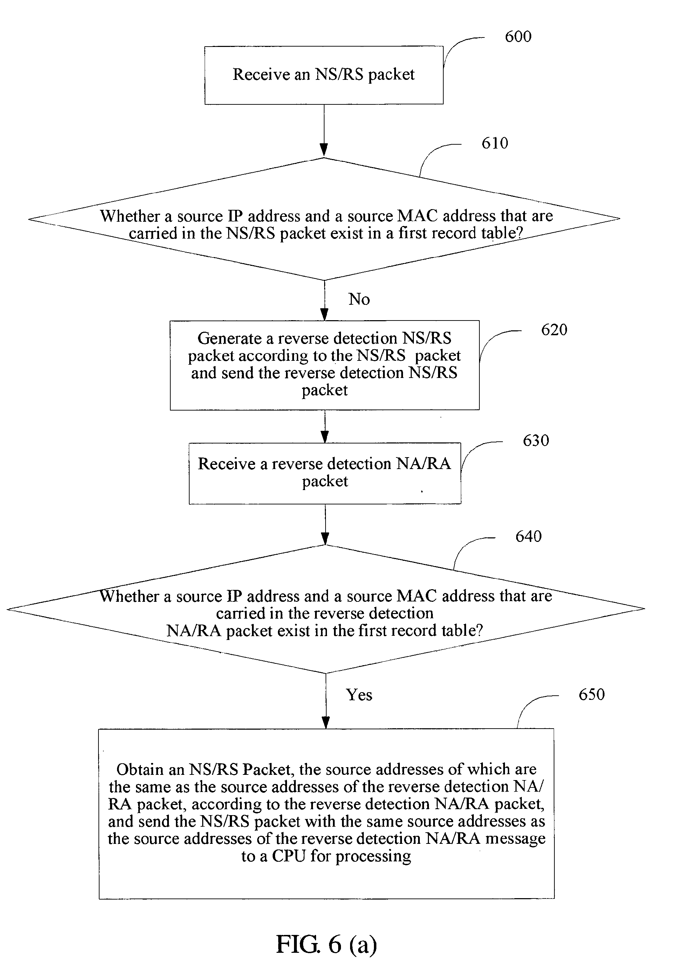

As shown in FIG. 6 (a), which is a schematic flowchart of another method for preventing an NDP network attack according to an embodiment of the present invention, the method includes:
600: Receive an NS or RS packet.
610. Judge whether information such as a source IP address and a source MAC address that are carried in the NS or RS packet exists in a first record table.

When the information such as the source IP address and the source MAC address that are carried in the NS or RS packet does not exist in the first record table, perform 620.

Optionally, when the information such as the source IP address and the source MAC address that are carried in the NS or RS packet exists in the first record table, it is indicated that the NS or RS packet has been received before, and no processing needs to be performed on the NS or RS packet.

620. Generate a reverse detection NS packet according to the NS packet and send the reverse detection NS packet, where a destination IP address carried in the reverse detection NS packet is the same as the source IP address carried in the NS packet received in 600; or, generate a reverse detection RS packet according to the RS packet and send the reverse detection RS packet, where a destination IP address carried in the reverse detection RS packet is the same as the source IP address carried in the RS packet received in 600.

630. Receive a reverse detection NA or RA packet.

In this embodiment, the reverse detection NA packet is a response made by a receiver of the reverse detection NS packet in response to the reverse detection NS packet; and the reverse detection RA packet is a response made by a receiver of the reverse detection RS packet in response to the reverse detection RS packet.

640. Judge whether information such as a source IP address and a source MAC address that are carried in the reverse detection NA or RA packet exists in the first record table.

When the information such as the source IP address and the source MAC address that are carried in the reverse detection NA or RA packet exists in the first record table, perform 650.

650. Obtain an NS packet with the same source addresses as the source addresses of the reverse detection NA packet according to the reverse detection NA packet, and send the NS packet with the same source addresses as the source addresses of the reverse detection NA packet to a CPU for processing; or, obtain an RS packet with the same source addresses as the source addresses of the reverse detection RA packet according to the reverse detection RA packet, and send the RS packet with the same source addresses as the source addresses of the reverse detection RA packet to the CPU for processing.

In this embodiment of the present invention, the NS packet with the same source addresses as the source addresses of the reverse detection NA packet, or the RS packet with the same source addresses as the source addresses of the reverse detection RA packet may be obtained by reserving the source IP address and the source MAC address that are carried in the reverse detection NA or RA packet, removing a destination IP address and a destination MAC address that are carried in the reverse detection NA or RA packet, and changing the type of the packet to a solicitation packet. In fact, the NS or RS packet with the same source addresses as the source addresses of the reverse detection NA or RA packet may be the NS or RS packet received in 600. For example, in this embodiment, the NS or RS packet received in 600 may be buffered, and the buffered NS or RS packet received in 600 may be directly sent to the CPU for processing when it is judged in 650 that the information such as the source IP address and the source MAC address that are carried in the reverse detection NA or RA packet exists in the first record table.

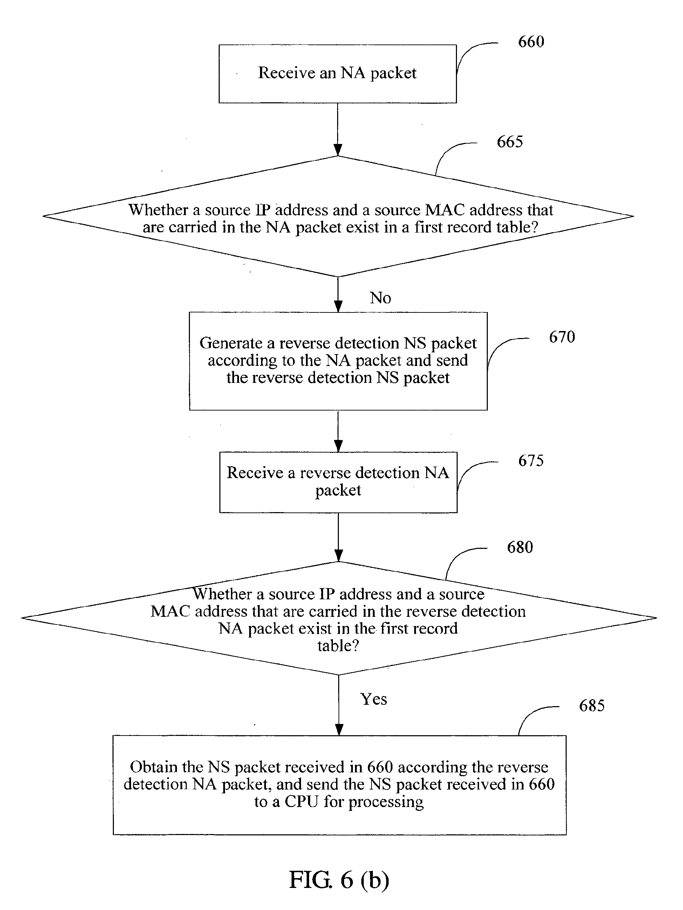

As shown in FIG. 6 (b), which is a schematic flowchart of another method for preventing an NDP network attack according to an embodiment of the present invention, the method includes:
660: Receive an NA packet.
665. Judge whether information such as a source IP address and a source MAC address that are carried in the NA packet exists in a first record table.

When the information such as the source IP address and the source MAC address that are carried in the NA packet does not exist in the first record table, perform 670.

Optionally, when the information such as the source IP address and the source MAC address that are carried in the NA packet exists in the first record table, it is indicated that the NA packet has been received before, and no processing needs to be performed on the NA packet.

670. Generate a reverse detection NS packet according to the NA packet and send the reverse detection NS packet. A destination IP address carried in the reverse detection NS packet is the same as the source IP address carried in the NA packet received in 660.

675. Receive the reverse detection NA packet.

In this embodiment, the reverse detection NA packet is a response made by a receiver of the reverse detection NS packet in response to the reverse detection NS packet.

680. Judge whether information such as a source IP address and a source MAC address that are carried in the reverse detection NA packet exists in the first record table.

When the information such as the source IP address and the source MAC address that are carried in the reverse detection NA packet exists in the first record table, perform 685.

685. Obtain the NA packet received in 660 according to the reverse detection NA packet, and send the NA packet received in 660 to the CPU for processing.

Specifically, in this embodiment, the NA packet received in 660 may be buffered, and the buffered NA packet received in 660 may be directly sent to the CPU for processing when it is judged in 680 that the information such as the source IP address and the source MAC address that are carried in the reverse detection NA packet exists in the first record table.

By using the methods provided in the embodiments as shown in FIG. 1 (a) to FIG. 6 (b), network attacks such as ARP and NDP can be prevented effectively, and a packet can be sent to the CPU for processing in the case that the validity of the packet is determined. Therefore, some application which requires sending packets to the CPU for processing is supported.

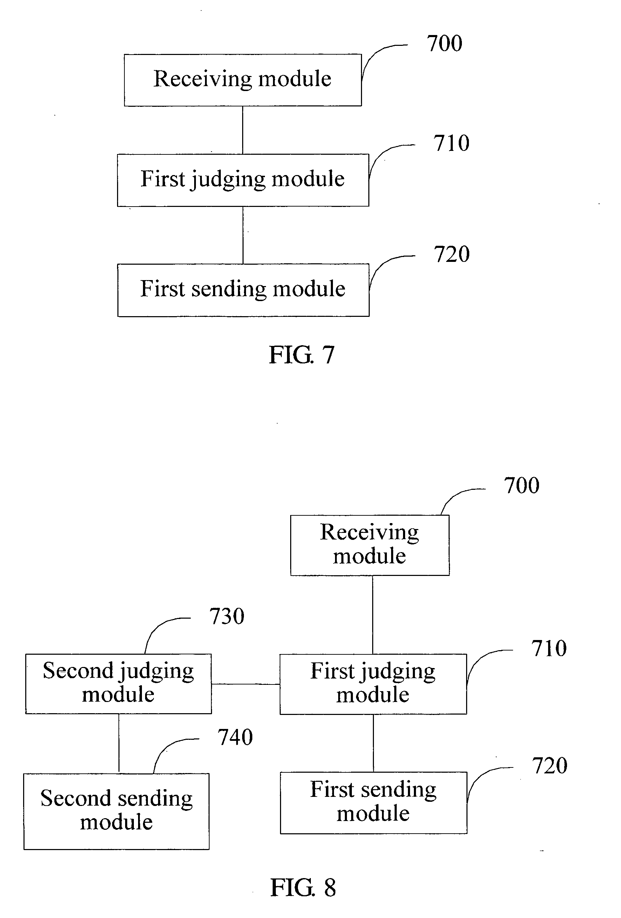

An embodiment of the present invention further provides an apparatus for preventing a network attack. As shown in FIG. 7, the apparatus includes:
A receiving module 700 is configured to receive a packet, and when the received packet is a first packet, trigger a first judging module 710.

In the IPv4, the first packet may be an ARP reply packet.

In the IPv6, the first packet may be an NA packet or an RA packet.

The first judging module 710 is configured to judge whether a source IP address and a source MAC address information that are carried in the first packet exist in a first record table; and when the source IP address and the source MAC address information that are carried in the first packet exist in the first record table, trigger a sending module 720.

In the embodiment of the present invention, the first record table at least includes information such as a source IP address and source MAC address that are learned for the first time. According to the first record table, whether the received first packet is sent by a legal user can be judged.

Optionally, the first record table may further include other information such as a VLAN that is learned for the first time and an ingress interface.

Optionally, the first record table may further include sending state information. For example, the sending state information may indicate whether a first packet corresponding to a record table entry has been sent to a CPU for processing. If the first packet corresponding to the record table entry has been sent to the CPU for processing, the sending state information may be recorded as S1; and if the first packet corresponding to the record table entry has not been sent to the CPU for processing, the sending state information may be recorded as S0.

Optionally, in practical application, an entry in the first record table may be a record in a memory, or a record in a database, or a record in a TCAM.

The first sending module 720 is configured to obtain a second packet, the source addresses of which are the same as the source addresses of the first packet, according to the first packet, and send the second packet to the CPU for processing, where the source addresses of the second packet are the same source as the source addresses of the first packet refers to: the source IP address carried in the second packet is the same as the source IP address carried in the first packet, and the source MAC address carried in the second packet is the same as the source MAC address carried in the first packet.

In the IPv4, the second packet may be an ARP request packet.

In the IPv6, the second packet may be an NS packet or RS packet.

Optionally, the apparatus may further include a second judging module 730 and a second sending module 740. When the source IP address and the source MAC address information that are carried in the first packet do not exist in the first record table, the first judging module 710 is further configured to trigger the second judging module 730, as shown in FIG. 8.

The second judging module 730 is configured to judge whether source IP address information carried in the first packet exists in a second record table; and when the source IP address information carried in the first packet exists in the second record table, trigger the second sending module 740.

In the embodiment of the present invention, the second record table at least includes a destination IP address entry carried in a packet sent for the first time.

Optionally, the second record table may further include sending state information. For example, the sending state information may indicate whether a first packet corresponding to a record table entry has been sent to a CPU for processing. If the first packet corresponding to the record table entry has been sent to the CPU for processing, the sending state information may be recorded as S1; if the first packet corresponding to the record table entry has not been sent to the CPU for processing, the sending state information may be recorded as S0.

Optionally, in practical application, an entry in the second record table may be a record in a memory, or a record in a database, or a record in a TCAM.

The second sending module 740 is configured to send the first packet to the CPU for processing.

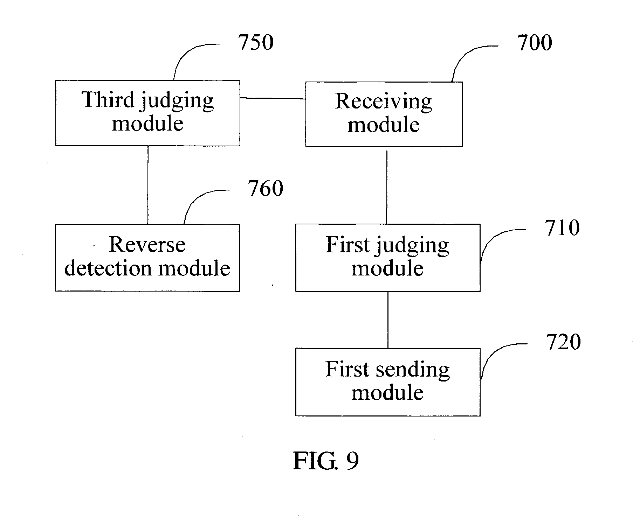

Optionally, the apparatus may further include a third judging module 750 and a reverse detection module 760. When the packet received by the receiving module 700 is a third packet, the receiving module 700 is further configured to trigger the third judging module 750, as shown in FIG. 9.

The third judging module 750 is configured to judge whether the source IP address and the source MAC address information that are carried in the third packet exist in the first record table; and when the source IP address and the source MAC address information that are carried in the third packet do not exist in the first record table, trigger the reverse detection module 760.

In the IPv4, the third packet may be an ARP request packet.

In the IPv6, the third packet may be an NS packet or an NA packet or an RS packet.

The reverse detection module 760 is configured to generate a fourth packet according to the third packet, and send the fourth packet.

In the IPv4, the fourth packet may be an ARP request packet.

In the IPv6, the fourth packet may be an NS packet or an RS packet.

In this embodiment of the present invention, a destination IP address carried in the fourth packet is the same as the source IP address carried in the third packet.

By using the apparatuses provided in the embodiments as shown in FIG. 7 to FIG. 9, network attacks such as ARP and NDP can be prevented effectively, and a packet can be sent to the CPU for processing in the case that the validity of the packet is determined. Therefore, some application that requires sending packets to the CPU for processing is supported.

To better clarify the methods and apparatuses provided in the embodiments of the present invention, the following gives more details with reference to several specific application scenarios.

### Application scenario 1

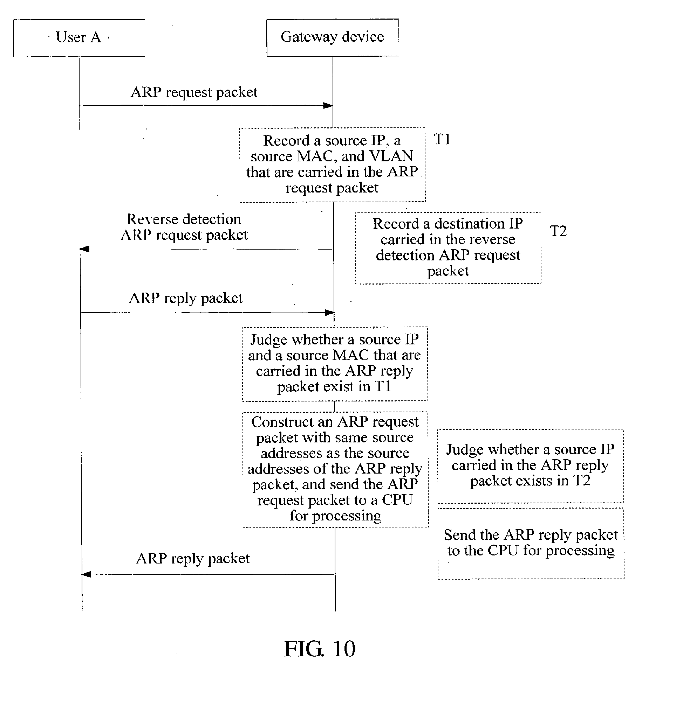

As shown in FIG. 10, in this application scenario, a gateway device receives an ARP request packet sent by a user A for the first time. After receiving the ARP request packet, the gateway device may record information such as a source IP address and a source MAC address that are carried in the ARP request packet to form a first record table (hereinafter referred to as T1 table), or add the information such as the source IP address and the source MAC address that are carried in the ARP request packet in an existing T1 table. In this scenario, the gateway device records the information such as the source IP address, the source MAC address, and VLAN that are carried in the ARP request packet, and adds such information into the T1 table.

Meanwhile, in this scenario, after receiving the ARP request packet, the gateway device does not send the ARP request packet to a CPU directly, but constructs a reverse detection ARP request packet according to the ARP request packet and sends the reverse detection ARP request packet. A destination IP address carried in the reverse detection ARP request packet is the same as the source IP address carried in the received ARP request packet.

Optionally, in this scenario, the gateway device may record the destination IP address carried in the sent reverse detection ARP request packet to form a second record table (hereinafter referred to as T2 table), or add the destination IP address into an existing T2 table.

After receiving the reverse detection ARP request packet sent by the gateway device, the user A returns an ARP reply packet to the gateway device.

After receiving the ARP reply packet, the gateway device judges, according to a source IP address and a source MAC address that are carried in the ARP reply packet, whether information such as the source IP address and the source MAC address that are carried in the ARP reply packet exists in the T1 table; and, if the information such as the source IP address and the source MAC address that are carried in the ARP reply packet exists in the T1 table, it is indicated that the ARP request packet previously received by the gateway device is sent by a legal user. In this case, the gateway device reconstructs an ARP request packet, the source addresses of which are the same as the source addresses of the ARP reply packet, according to the ARP reply packet. For example, the ARP request packet may be obtained again by reserving the source IP address and the source MAC address that are carried in the ARP reply packet, removing a destination IP address and a destination MAC address that are carried in the ARP reply packet, and changing the type of the packet to a request packet. The obtained ARP request packet is sent to the CPU for processing.

After processing the sent ARP request packet by the CPU, the gateway device returns an ARP reply packet to the user A according to stipulations of an ARP protocol.

In this case, the validity of the ARP request packet is determined, the CPU of the gateway device is protected against attacks from illegal ARP packets, a legal ARP request packet can be sent to the CPU for processing, and some application that requires sending ARP packets to the CPU for processing is supported.

Certainly, in this scenario, if the information such as the source IP address and the source MAC address that are carried in the ARP reply packet does not exist in the T1 table, there are several possibilities at this time. One possibility is that the ARP request packet previously received by the gateway device is not sent by the authentic user A, but is an ARP request packet faked by an attacker. Therefore, after the gateway device receives the ARP request packet, the recorded source IP address is the IP address of the user A, and the recorded source MAC address is the MAC address of the attacker.

After the gateway device sends the reverse detection ARP request packet (the destination IP address carried in the reverse detection ARP request packet is the same as the source IP address carried in the received ARP request packet), the user A naturally returns an ARP reply packet. In this case, the source IP address and the source MAC address that are carried in the ARP reply packet received by the gateway device are the IP address and MAC address of the user A, and do not match the "IP address of the user A, MAC of the attacker" entry in the T1 table naturally.

In this case, optionally, whether a source IP address entry carried in the ARP reply packet exists in a T2 table may be further judged; if the source IP address entry carried in the ARP reply packet exists in the T2 table, it is at least indicated that a sender of the ARP reply packet definitely receives the ARP request packet sent by the gateway device. In this case, the sender of the ARP reply packet may be regarded as legal. Therefore, the ARP reply packet may be sent to the CPU for processing.

### Application scenario 2

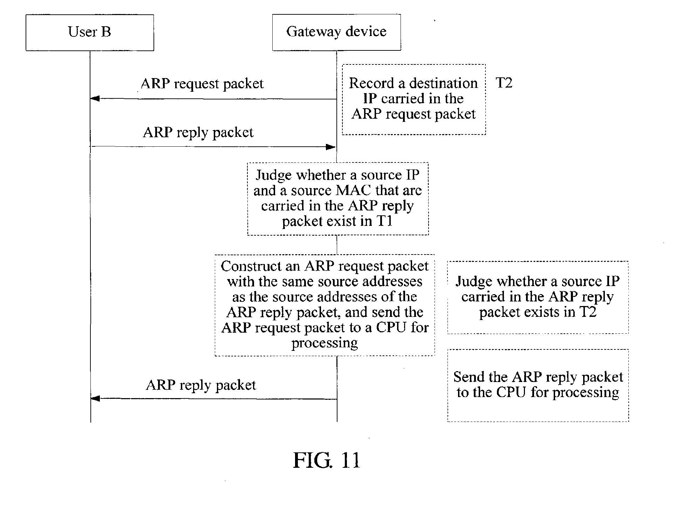

As shown in FIG. 11, in this scenario, a gateway device sends an ARP request packet proactively to request to obtain a MAC address of a user B.

Optionally, in this scenario, the gateway device records a destination IP address carried in the sent ARP request packet to form a T2 table, or adds the destination IP address carried in the sent ARP request packet into an existing T2 table.

After receiving the ARP request packet sent by the gateway device, the user B returns an ARP reply packet to the gateway device.

After receiving the ARP reply packet returned by the user B, the gateway device judges, according to a source IP address and a source MAC address that are carried in the ARP reply packet, whether information such as the source IP address and the source MAC address that are carried in the ARP reply packet exists in the existing T1 table; and, if the information such as the source IP address and the source MAC address that are carried in the ARP reply packet exists in the existing T1 table, it is indicated that the gateway device has at least once received the ARP request packet from this user before, and the user may be regarded as legal. In this case, the gateway device reconstructs an ARP request packet, the source addresses of which are the same as the source addresses of the ARP reply packet, according to the ARP reply packet, and sends the reconstructed ARP request packet to a CPU for processing.

After processing the sent ARP request packet by the CPU, the gateway device returns an ARP reply packet to the user B according to stipulations of an ARP protocol.

However, in this scenario, the gateway device sends the ARP request packet proactively. Therefore, in practice, the gateway device probably has never received the ARP request packet from this user. In this case, the information such as the source IP address and the source MAC address that are carried in the ARP reply packet does not exist in the T1 table. In this case, whether information such as the source IP address carried in the ARP reply packet exists in the T2 table may be further judged; if the information such as the source IP address carried in the ARP reply packet exists in the T2 table, it is at least indicated that a sender of the ARP reply packet definitely receives the ARP request packet sent by the gateway device. In this case, the sender of the ARP reply packet may be regarded as legal. Therefore, the ARP reply packet may be sent to the CPU for processing.

### Application scenario 3

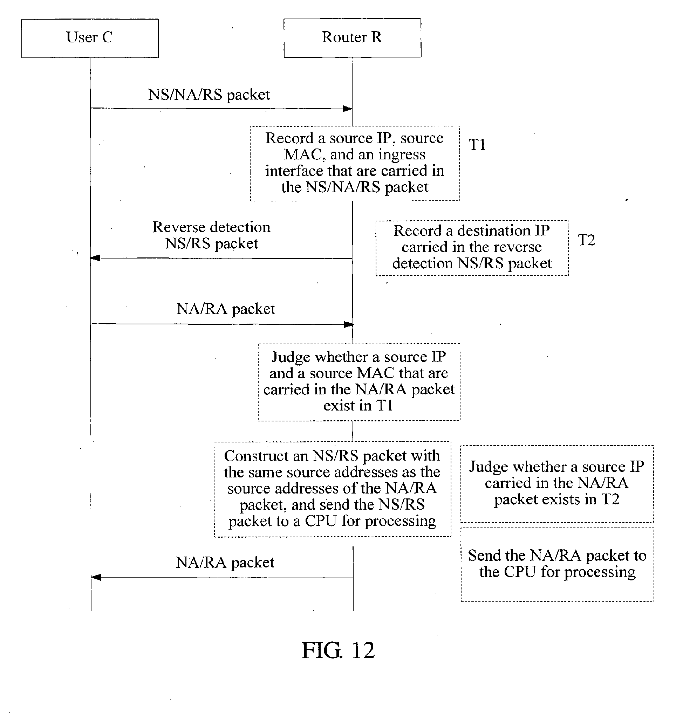

As shown in FIG. 12, in this application scenario, a router R receives an NS/RS packet sent by a user C for the first time. After receiving the NS/RS packet, the router R does not directly send the NS/RS packet to a CPU for processing, but records information such as a source IP address and a source MAC address that are carried in the NS/RS packet to form a first record table (hereinafter referred to as T1 table), or adds the information such as the source IP address and the source MAC address that are carried in the NS/RS packet in an existing T1 table. In this scenario, the router R records the information such as the source IP address, the source MAC address, and ingress interface that are carried in the NS/RS packet, and adds such information into the T1 table.

In this scenario, the router R constructs a reverse detection NS/RS packet according to the received NS/RS packet, where a destination IP address carried in the reverse detection NS packet is the same as the source IP address carried in the received NS packet, or a destination IP address carried in the reverse detection RS packet is the same as the source IP address carried in the received RS packet.

Optionally, in this scenario, the router R may record the destination IP address carried in the sent reverse detection NS/RS packet to form a second record table (hereinafter referred to as T2 table), or add the destination IP address into an existing T2 table.

After receiving the reverse detection NS/RS packet sent by the router R, the user C returns an NA/RA packet to the router R.

After receiving the NA/RA packet, the router R judges, according to a source IP address and a source MAC address that are carried in the NA/RA packet, whether information such as the source IP address and the source MAC address that are carried in the NA/RA packet exists in the T1 table; and, if the information such as the source IP address and the source MAC address that are carried in the NA/RA packet exists in the T1 table, it is indicated that the NS/RS request packet previously received by the router R is sent by a legal user. In this case, the router R reconstructs an NS/RS packet according to the NA/RA packet. For example, an NS/RS packet may be obtained again by reserving the source IP address and source MAC address that are carried in the NA/RA packet, removing a destination IP address and a destination MAC address that are carried in the NA/RA packet, and changing the type of the packet to a solicitation packet. The obtained NS/RS packet is sent to the CPU for processing.

After processing the sent ARP request packet by the CPU, the router R returns an NA/RA packet to the user C according to stipulations of an NDP protocol.

Through the description of the foregoing embodiments, an ordinary person skilled in the art is clearly aware that the embodiments of the present invention may be implemented through hardware, or through software in addition to a necessary universal hardware platform. Based on such understanding, the technical solutions of the embodiments of the present invention may be embodied in a software product. The software product may be stored in a storage medium such as a ROM/RAM, a magnetic disk, or a compact disk, and incorporates several instructions for instructing a computer device, or a server, or another network device to execute the method described in any embodiment of the present invention or part of the embodiment.

The foregoing arc merely exemplary embodiments of the present invention, but not intended to limit the scope of the present invention.

## Claims

1. A method for preventing a network attack, comprising:
receiving a packet (100, 200);
when the received packet is a first packet, judging whether a source Internet Protocol, IP, address and a source Media Access Control, MAC, address information that are carried in the first packet exist in a first record table (110, 210), which at least includes a source IP address and a source MAC address that are learned for the first time; **characterized in that**
when the source IP address and the source MAC address information that are carried in the first packet exist in the first record table, obtaining a second packet, the source addresses of which are the same as the source addresses of the first packet, according to the first packet (120, 220); and
sending the second packet to a central processing unit, CPU, for processing (120, 220);
wherein the first packet is an Address Resolution Protocol, ARP, reply packet, or a neighbor advertisement, NA, packet, or a router advertisement, RA, packet;
when the first packet is the ARP reply packet, the second packet is an ARP request packet;
when the first packet is the NA packet, the second packet is a neighbor solicitation, NS, packet; and
when the first packet is the RA packet, the second packet is a router solicitation, RS, packet.

2. The method according to claim 1, wherein when the source IP address and the source MAC address information that are carried in the first packet do not exist in the first record table, the method comprises:
judging whether the source IP address information carried in the first packet exists in a second record table (130); and
when the source IP address information carried in the first packet exists in the second record table, sending the first packet to the CPU for processing (140).

3. The method according to claim 1 or 2, wherein when the received packet is a third packet, the method comprises:
judging whether a source IP address and a source MAC address information that are carried in the third packet exist in the first record table (230); and
when the source IP address and the source MAC address information that are carried in the third packet do not exist in the first record table, generating a fourth packet according to the third packet, wherein a destination IP address information carried in the fourth packet is the same as the source IP address information carried in the third packet (240); and
sending the fourth packet (240);
wherein when the first packet is the ARP reply packet, the third packet and the fourth packet are ARP request packets;
when the first packet is the NA packet, the fourth packet is neighbor solicitation, NS, packet, and the third packet is an NS packet or an NA packet; and
when the first packet is the RA packet, the third packet and the fourth packet are router solicitation, RS, packets.

4. An apparatus for preventing a network attack, comprising:
a receiving module (700), configured to receive a packet, and when the received packet is a first packet, trigger a first judging module (710);
the first judging module (710), configured to judge whether a source Internet Protocol, IP, address and a source Media Access Control, MAC, address information that are carried in the first packet exist in a first record table, which at least includes a source IP address and a source MAC address that are learned for the first time; **characterized in that**
when the source IP address and the source MAC address information that are carried in the first packet exist in the first record table, the first judging module (710) is configured to trigger a first sending module (720); and
the first sending module (720), configured to obtain a second packet, the source addresses of which are the same as the source addresses of the first packet, according to the first packet, and send the second packet to a central processing unit CPU for processing;
wherein the first packet is an Address Resolution Protocol, ARP, reply packet, or a neighbor advertisement, NA, packet, or a router advertisement, RA, packet;
when the first packet is the ARP reply packet, the second packet is an ARP request packet;
when the first packet is the NA packet, the second packet is a neighbor solicitation, NS, packet; and
when the first packet is the RA packet, the second packet is a router solicitation, RS, packet.

5. The apparatus according to claim 4, wherein:
when the source IP address and the source MAC address information that are carried in the first packet do not exist in the first record table, the first judging module (710) is further configured to trigger a second judging module (730);
the second judging module (730) is configured to judge whether the source IP address information carried in the first packet exists in a second record table; and when the source IP address information carried in the first packet exists in the second record table, trigger a second sending module (740); and
the second sending module (740) is configured to send the first packet to the CPU for processing.

6. The apparatus according to claim 4 or 5, wherein:
when the packet received by the receiving module (700) is a third packet, the receiving module (700) is further configured to trigger a third judging module (750);
the third judging module (750) is configured to judge whether a source IP address and a source MAC address information that are carried in the third packet exist in the first record table; and when the source IP address and the source MAC address information that are carried in the third packet do not exist in the first record table, trigger a reverse detection module (760); and
the reverse detection module (760) is configured to generate a fourth packet according to the third packet and send the fourth packet, wherein a destination IP address information carried in the fourth packet is the same as the source IP address information carried in the third packet;
wherein when the first packet is the ARP reply packet, the third packet and the fourth packet are ARP request packets;
when the first packet is the NA packet, the fourth packet is neighbor solicitation, NS, packet, and the third packet is an NS packet or an NA packet; and
when the first packet is the RA packet, the third packet and the fourth packet are router solicitation, RS, packets.

## Patentansprüche

1. Verfahren zum Verhindern einer Netzwerkattacke, umfassend:
Empfangen eines Pakets (100, 200);
wenn das empfangene Paket ein erstes Paket ist, Beurteilen, ob eine Internet-Protokoll- bzw. IP-Quellenadressen- und eine Medienzugangssteuerung- bzw. MAC-Quellenadresseninformation, die in dem ersten Paket getragen werden, in einer ersten Aufzeichnungstabelle (110, 210), die mindestens eine IP-Quellenadresse und eine MAC-Quellenadresse enthält, die zum ersten Mal gelernt werden, existieren; **dadurch gekennzeichnet, dass**
wenn die IP-Quellenadressen- und die MAC-Quellenadresseninformation, die in dem ersten Paket getragen werden, in der ersten Aufzeichnungstabelle existieren,
Erlangen eines zweiten Pakets, dessen Quellenadressen die gleichen sind wie die Quellenadressen des ersten Pakets gemäß dem ersten Paket (120, 220); und
Senden des zweiten Pakets zu einer zentralen Verarbeitungseinheit, CPU, zur Verarbeitung (120, 220);
wobei das erste Paket ein Adressenauflösungsprotokoll- bzw. ARP-Antwortpaket oder ein Nachbarankündigungs- bzw. NA-Paket oder ein Routerankündigungs- bzw.
RA-Paket ist;
wenn das erste Paket das ARP-Antwortpaket ist, das zweite Paket ein ARP-Anforderungspaket ist;
wenn das erste Paket das NA-Paket ist, das zweite Paket ein Nachbaraufforderungs- bzw. NS-Paket ist; und
wenn das erste Paket das RA-Paket ist, das zweite Paket ein Routeraufforderungs- bzw. RS-Paket ist.

2. Verfahren nach Anspruch 1, wobei, wenn die IP-Quellenadressen- und die MAC-Quellenadresseninformation, die in dem ersten Paket getragen werden, nicht in der ersten Aufzeichnungstabelle existieren, das Verfahren umfasst:
Beurteilen, ob die in dem ersten Paket getragene IP-Quellenadresseninformation in einer zweiten Aufzeichnungstabelle (130) existiert; und
wenn die in dem ersten Paket getragene IP-Quellenadresseninformation in der zweiten Aufzeichnungstabelle existiert, Senden des ersten Pakets zu der CPU für Verarbeitung (140).

3. Verfahren nach Anspruch 1 oder 2, wobei, wenn das empfangene Paket ein drittes Paket ist, das Verfahren umfasst:
Beurteilen, ob eine IP-Quellenadressen- und eine MAC-Quellenadresseninformation, die in dem dritten Paket getragen werden, in der ersten Aufzeichnungstabelle (230) existiert; und
wenn die IP-Quellenadressen- und die MAC-Quellenadresseninformation, die in dem dritten Paket getragen werden, in der ersten Aufzeichnungstabelle nicht existieren, Erzeugen eines vierten Pakets gemäß dem dritten Paket, wobei eine in dem vierten Paket getragene IP-Zieladresseninformation die gleiche ist wie die in dem dritten Paket getragene IP-Quellenadresseninformation (240); und
Senden des vierten Pakets (240);
wobei, wenn das erste Paket das ARP-Antwortpaket ist, das dritte Paket und das vierte Paket ARP-Anforderungspakete sind,
wenn das erste Paket das NA-Paket ist, das vierte Paket ein Nachbaraufforderungs- bzw. NS-Paket ist und das dritte Paket ein NS-Paket oder ein NA-Paket ist; und wenn das erste Paket das RA-Paket ist, das dritte Paket und das vierte Paket Routeraufforderungs- bzw. RS-Pakete sind.

4. Vorrichtung zum Verhindern einer Netzwerkattacke, umfassend:
ein Empfangsmodul (700), konfiguriert zum Empfangen eines Pakets, und wenn das empfangene Paket ein erstes Paket ist, Auslösen eines ersten Beurteilungsmoduls (710);
ein erstes Beurteilungsmodul (710), konfiguriert zum Beurteilen, ob eine Internet-Protokoll- bzw. IP-Quellenadressen- und eine Medienzugangssteuerung- bzw. MAC-Quellenadresseninformation, die in dem ersten Paket getragen werden, in einer ersten Aufzeichnungstabelle, die mindestens eine IP-Quellenadresse und eine MAC-Quellenadresse enthält, die zum ersten Mal gelernt werden, existieren; **dadurch gekennzeichnet, dass**
wenn die IP-Quellenadressen- und die MAC-Quellenadresseninformation, die in dem ersten Paket getragen werden, in der ersten Aufzeichnungstabelle existieren, das erste Beurteilungsmodul (710) konfiguriert ist zum Auslösen eines ersten Sendemoduls (720); und
das erste Sendemodul (720) konfiguriert ist zum Erlangen eines zweiten Pakets, dessen Quellenadressen die gleichen sind wie die Quellenadressen des ersten Pakets gemäß dem ersten Paket, und Senden des zweiten Pakets zu einer zentralen Verarbeitungseinheit, CPU, zur Verarbeitung;
wobei das erste Paket ein Adressenauflösungsprotokoll- bzw. ARP-Antwortpaket oder ein Nachbarankündigungs- bzw. NA-Paket oder ein Routerankündigungs- bzw. RA-Paket ist;
wenn das erste Paket das ARP-Antwortpaket ist, das zweite Paket ein ARP-Anforderungspaket ist;
wenn das erste Paket das NA-Paket ist, das zweite Paket ein Nachbaraufforderungs- bzw. NS-Paket ist; und
wenn das erste Paket das RA-Paket ist, das zweite Paket ein Routeraufforderungs- bzw. RS-Paket ist.

5. Vorrichtung nach Anspruch 4, wobei:
wenn die IP-Quellenadressen- und die MAC-Quellenadresseninformation, die in dem ersten Paket getragen werden, nicht in der ersten Aufzeichnungstabelle existieren,
das erste Beurteilungsmodul (710) ferner konfiguriert ist zum Auslösen eines zweiten Beurteilungsmoduls (730):
das zweite Beurteilungsmodul (730) konfiguriert ist zum Beurteilen, ob die in dem ersten Paket getragene IP-Quellenadresseninformation in einer zweiten Aufzeichnungstabelle existiert; und wenn die in dem ersten Paket getragene IP-Quellenadresseninformation in der zweiten Aufzeichnungstabelle existiert, Auslösen eines zweiten Sendemoduls (740); und
das zweite Sendemodul (740) konfiguriert ist zum Senden des ersten Pakets zu der CPU für Verarbeitung.

6. Vorrichtung nach Anspruch 4 oder 5, wobei:
wenn das durch das Empfangsmodul (700) empfangene Paket ein drittes Paket ist, das Empfangsmodul (700) ferner konfiguriert ist zum Auslösen eines dritten Beurteilungsmoduls (750);
das dritte Beurteilungsmodul (750) konfiguriert ist zum Beurteilen, ob eine IP-Quellenadressen- und eine MAC-Quellenadresseninformation, die in dem dritten Paket getragen werden, in der ersten Aufzeichnungstabelle (230) existieren; und
wenn die IP-Quellenadressen- und die MAC-Quellenadresseninformation, die in dem dritten Paket getragen werden, in der ersten Aufzeichnungstabelle nicht existieren, Auslösen eines Umkehrdetektionsmoduls (760); und
das Umkehrdetektionsmodul (760) konfiguriert ist zum Erzeugen eines vierten Pakets gemäß dem dritten Paket und Senden des vierten Pakets, wobei eine in dem vierten Paket getragene IP-Zieladresseninformation die gleiche ist wie die in dem dritten Paket getragene IP-Quellenadresseninformation;
wobei, wenn das erste Paket das ARP-Antwortpaket ist, das dritte Paket und das vierte Paket ARP-Anforderungspakete sind;
wenn das erste Paket das NA-Paket ist, das vierte Paket ein Nachbaraufforderungs- bzw. NS-Paket ist und das dritte Paket ein NS-Paket oder ein NA-Paket ist; und
wenn das erste Paket das RA-Paket ist, das dritte Paket und das vierte Paket Routeraufforderungs- bzw. RS-Pakete sind.

## Revendications

1. Procédé d'évitement d'une attaque de réseau, comprenant :
la réception d'un paquet (100, 200) ;
quand le paquet reçu est un premier paquet, le jugement que des informations d'adresse de Protocole Internet, IP, source et d'adresse de Commande d'Accès au Support, MAC, source, incluses dans le premier paquet figurent ou non dans une première table d'enregistrements (110, 210), laquelle comporte au moins une adresse IP source et une adresse MAC source qui sont apprises pour la première fois ;
**caractérisé par** :
quand les informations d'adresse IP source et les informations d'adresse MAC source qui sont incluses dans le premier paquet figurent dans la première table d'enregistrements, l'obtention d'un deuxième paquet, dont les adresses source sont identiques aux adresses source du premier paquet, en fonction du premier paquet (120, 220) ; et
l'envoi du deuxième paquet à une unité centrale, UC, en vue de son traitement (120, 220) ;
dans lequel le premier paquet est un paquet de réponse de Protocole de Résolution d'Adresse, ARP, ou un paquet d'annonce de voisin, NA, ou un paquet d'annonce de routeur, RA ;
quand le premier paquet est le paquet de réponse ARP, le deuxième paquet est un paquet de requête ARP ;
quand le premier paquet est le paquet NA, le deuxième paquet est un paquet de sollicitation de voisin, NS ; et
quand le premier paquet est le paquet RA, le deuxième paquet est un paquet de sollicitation de routeur, RS.

2. Procédé selon la revendication 1, comprenant en outre quand les informations d'adresse IP source et les informations d'adresse MAC source incluses dans le premier paquet n'existent pas dans la première table d'enregistrements :
le jugement que les informations d'adresse IP source incluses dans le premier paquet existent ou non dans une deuxième table d'enregistrements (130) ; et
quand les informations d'adresse IP source incluses dans le premier paquet existent dans la deuxième table d'enregistrements, l'envoi du premier paquet à l'UC, en vue de son traitement (140).

3. Procédé selon la revendication 1 ou 2, comprenant en outre quand le paquet reçu est un troisième paquet :
le jugement que des informations d'adresse IP source et des informations d'adresse MAC source incluses dans le troisième paquet existent ou non dans la première table d'enregistrements (230) ; et
quand les informations d'adresse IP source et les informations d'adresse MAC source incluses dans le troisième paquet n'existent pas dans la première table d'enregistrements, la génération d'un quatrième paquet en fonction du troisième paquet, dans lequel des informations d'adresse IP destinataire incluses dans le quatrième paquet sont identiques aux informations d'adresse IP source incluses dans le troisième paquet (240) ; et
l'envoi du quatrième paquet (240) ;
dans lequel quand le premier paquet est le paquet de réponse ARP, le troisième paquet et le quatrième paquet sont des paquets de requête ARP ;
quand le premier paquet est le paquet NA, le quatrième paquet est un paquet de sollicitation de voisin, NS, et le troisième paquet est un paquet NS ou un paquet NA ; et
quand le premier paquet est le paquet RA, le troisième paquet et le quatrième paquet sont des paquets de sollicitation de routeur, RS.

4. Appareil d'évitement d'une attaque de réseau, comprenant :
un module de réception (700), configuré pour recevoir un paquet, et quand le paquet reçu est un premier paquet, déclencher un premier module de jugement (710) ;
le premier module de jugement (710), configuré pour juger que des informations d'adresse de Protocole Internet, IP, source et d'adresse de Commande d'Accès au Support, MAC, source, incluses dans le premier paquet figurent ou non dans une première table d'enregistrements, laquelle comporte au moins une adresse IP source et une adresse MAC source qui sont apprises pour la première fois ; **caractérisé en ce que** :
quand les informations d'adresse IP source et les informations d'adresse MAC source qui sont incluses dans le premier paquet existent dans la première table d'enregistrements, le premier module de jugement (710) est configuré pour déclencher un premier module d'envoi (720) ; et
le premier module d'envoi (720), configuré pour obtenir un deuxième paquet, dont les adresses source sont identiques aux adresses source du premier paquet, en fonction du premier paquet, et envoyer le deuxième paquet à une unité centrale, UC, en vue de son traitement ;
dans lequel le premier paquet est un paquet de réponse de Protocole de Résolution d'Adresse, ARP, ou un paquet d'annonce de voisin, NA, ou un paquet d'annonce de routeur, RA ;
quand le premier paquet est le paquet de réponse ARP, le deuxième paquet est un paquet de requête ARP ;
quand le premier paquet est le paquet NA, le deuxième paquet est un paquet de sollicitation de voisin, NS ; et
quand le premier paquet est le paquet RA, le deuxième paquet est un paquet de sollicitation de routeur, RS.

5. Appareil selon la revendication 4, dans lequel :
quand les informations d'adresse IP source et les informations d'adresse MAC source incluses dans le premier paquet n'existent pas dans la première table d'enregistrements, le premier module de jugement (710) est configuré en outre pour déclencher un deuxième module de jugement (730) ;
le deuxième module de jugement (730) est configuré pour juger que les informations d'adresse IP source incluses dans le premier paquet existent ou non dans une deuxième table d'enregistrements ; et quand les informations d'adresse IP source incluses dans le premier paquet existent dans la deuxième table d'enregistrements, déclencher un deuxième module d'envoi (740) ; et
le deuxième module d'envoi (740) est configuré pour envoyer le premier paquet à l'UC en vue de son traitement.

6. Appareil selon la revendication 4 ou 5, dans lequel :
quand le paquet reçu par le module de réception (700) est un troisième paquet, le module de réception (700) est configuré en outre pour déclencher un troisième module de jugement (750) ;
le troisième module de jugement (750) est configuré pour juger que des informations d'adresse IP source et des informations d'adresse MAC source incluses dans le troisième paquet existent ou non dans la première table d'enregistrements ; et quand les informations d'adresse IP source et les informations d'adresse MAC source incluses dans le troisième paquet n'existent pas dans la première table d'enregistrements, déclencher un module de détection inverse (760) ; et
le module de détection inverse (760) est configuré pour générer un quatrième paquet en fonction du troisième paquet et envoyer le quatrième paquet, dans lequel des informations d'adresse IP destinataire incluses dans le quatrième paquet sont identiques aux informations d'adresse IP source incluses dans le troisième paquet ;
dans lequel quand le premier paquet est le paquet de réponse ARP, le troisième paquet et le quatrième paquet sont des paquets de requête ARP ;
quand le premier paquet est le paquet NA, le quatrième paquet est un paquet de sollicitation de voisin, NS, et le troisième paquet est un paquet NS ou un paquet NA ;
et
quand le premier paquet est le paquet RA, le troisième paquet et le quatrième paquet sont des paquets de sollicitation de routeur, RS.
